# EUROPEAN PATENT SPECIFICATION

(11) **EP 0 913 636 B1**
(45) Date of publication and mention of the grant of the patent: **31.08.2005**
(21) Application number: 99101313.7
(22) Date of filing: 15.10.1990
(51) Int. Cl.: F23G 5/00, F23H 3/02

(54) **Incinerator system and method for bulk refuse**
Verfahren und Vorrichtung zur Verbrennung von Schüttabfällen
Dispositif et procédé d'incinération pour déchets en vrac

(43) Date of publication of application: 06.05.1999
(62) Divisional of application: 90311260.5
(73) Proprietor: Basic, John N. Sr., Florida 34145 (US)
(72) Inventor: Basic, John N. Sr., Florida 34145 (US)
(74) Representative: Goodenough, Nigel

(56) References cited:
- WO-A-90/08918
- DE-A- 1 679 421
- FR-A- 551 493
- FR-A- 662 890
- US-A- 2 103 488
- US-A- 3 780 674
- US-A- 4 414 904
- US-A- 4 475 469
- US-A- 4 491 077

## Description

This invention relates to an incinerator system and method for bulk refuse. Prior art document FR 551493 discloses an incinerator system according to the preamble of the appended claims. However, the prior art system comprises moving grates which must rotate in order to allow burning material to pass therethrough. Once refuse has been passed, the grate of this prior art system must rotate upwards so as to resume its original position. Prior art document document WO 90/08918 also discloses a device comprising a bar grate for receiving material to be combusted wherein material-loosening means extend through the bars of the grate. Furthermore, prior art document US 4,491,077 discloses a burner in which a grate and vibrating means cooperate to decelerate the movement of combustion materials along the grate.

The invention provides a method of burning refuse according to the appended independent claim 1. Further novel and advantageous method steps are set out in the appended dependent claims 2 to 4. A further aspect of the invention also provides an incinerator system in combination with bulk refuse according to the appended independent claim 5. Further novel and advantageous features are set out in the appended dependent claims 6 to 11.

In accordance with the invention, an incinerator system having a main incinerator chamber and a floor upon which refuse is incinerated includes an inlet opening located above the level of the incinerator floor. A grate device is located above the floor of the main chamber in close proximity to the inlet opening. Accordingly, material to be burnt introduced into the main chamber through the inlet opening is introduced onto the grate device. The grate device holds the refuse for a limited period of time after its introduction through the inlet opening. Subsequently, the grate device allows the refuse, which is still burning, to fall on to the floor of the main chamber for completion of the incineration process.

The use of an auxiliary grate of this fashion has been found to be useful for various types of refuse including material having a large content of moisture or with a large amount of high energy combustible material. In the former case, the retention of the refuse for a brief prior of time on the grate allows it to dry before it drops on to the chamber floor. With high energy (so called "high Btu") refuse, maintaining it on the grate allows a portion of it to volatilize and begin to burn at relatively high temperatures. The material which drops to the chamber floor will tend to burn at a lower temperature and will accordingly have less of a propensity to induce slagging of the chamber floor. The method of burning refuse to obtain this advantage involves placing it through an inlet opening into an enclosed main chamber of an incinerator system and, specifically, on to a grate located within the main chamber. A fire resistant floor sits below the grate. The process continues with the partial burning of the refuse while on the grate. While the refuse continues to burn it is placed, generally through dropping, on to the chamber's floor. Finally, the burning of the refuse continues whilst it sits on the floor.

The invention will be better understood from the following description of a preferred embodiment thereof, given by way of example only, reference being had to the accompanying drawings wherein:
Figure 1 is a perspective view of an incinerator system installation;
Figure 2 is a top plan view of a reburn unit having two separate reburn tunnels with each tunnel having two separate reburn stages;
FIGURE 3 provides a side elevational view of the reburn unit shown in FIGURE 2 and also shows further stages for processing the exaust gases.
FIGURE 4 gives a cross-sectional view of the twin reburn tunnels of FIGURE 3 along the line 4-4.
FIGURE 5 provides a close-up view, partially in section, of the damper that can serve to close off either or even both of the twin reburn tunnels of Figures 1 to 4.
FIGURE 6 shows the outlet openings of the twin reburn tunnels and the choke dampers which can partially close each of the outlet openings.
FIGURE 7 illustrates a damper that can serve to close off the inlet opening to either the twin reburn tunnels or partially block the outlet openings.
FIGURE 8 gives a cross-sectional view of a reburn tunnel having an excitor inside where air enters through both the reburn unit's wall and the excitor's wall.
FIGURE 9 provides a side cross-sectional view of a portion of a reburn tunnel having an excitor inside in which air enters the reburn tunnel through nozzles placed only on the excitor.
FIGURE 10 gives a cross-sectional view along the line 10-10 of the reburn tunnel shown in FIGURE 9.
FIGURES 11 to 15 provide diagramatic cross-sectional views of reburn tunnels with excitors showing, in particular, different techniques for increasing the cross-sectional areas of the reburn tunnels in going from the inlet opening to the outlet opening.
FIGURE 16 gives an isometric view, partially in section, of an incinerator main chamber having a grate in the vicinity of the inlet opening to the chamber but located above the chamber's floor.
FIGURE 17 displays an end view, in cross section, of the incinerator chamber of FIGURE 16.
FIGURE 18 provides a side elevational view of a scoop mechanism for removing ashes from the output pit of an incinerator system.
FIGURE 19 gives a side elevational view of an ash scoop used in the mechanism of FIGURE 18.
FIGURE 20 displays a top plan of the scoop of FIGURE 19.
FIGURE 21 gives an end elevational view along the line 21-21 of the track guide of the scoop of FIGURE 20.
FIGURE 22 illustrates a side elevational view of yet a further alternate ash removal mechanism.
FIGURE 23 provides an enlarged view of the chute mechanism shown in FIGURE 22.
FIGURE 24 gives a side elevational view of an alternate ash removal scoop for use in the mechanisms shown in Figures 18, 22, and 23.

### DETAILED DESCRIPTION

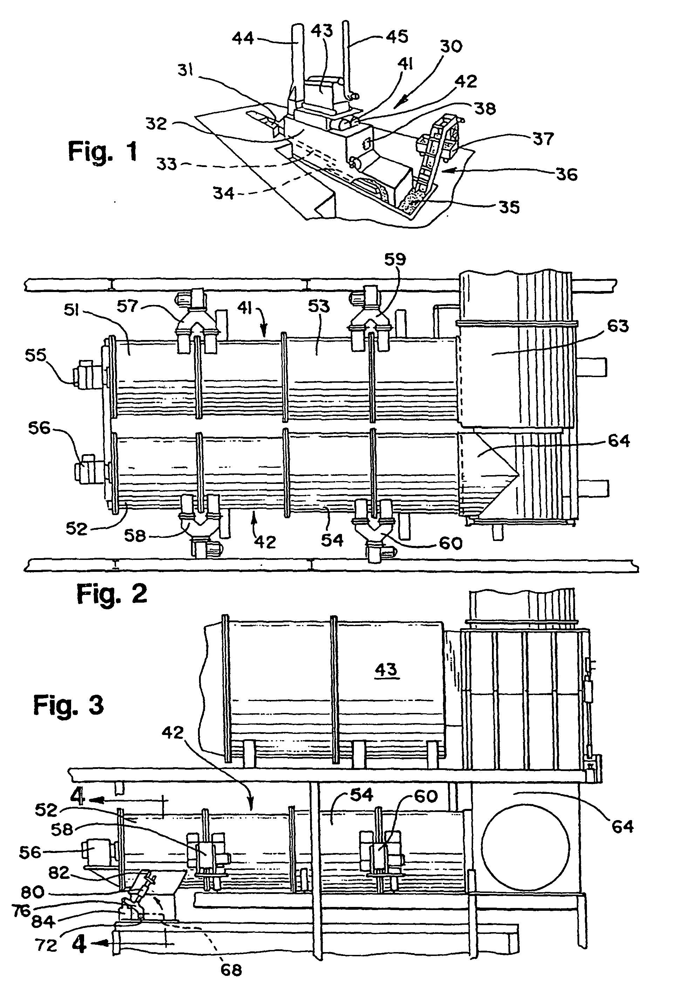

FIGURE 1 shows an incinerator system generally at 30. Bulk refuse or hydrocarbon-containing liquids enters the incinerator 30 through the loader 31 and enters the main chamber 32. During most of its stay in the incinerator 30, solid refuse remains upon the pulsating hearth floors 33 and 34. Upon the completion of combustion, the remaining ash falls into the pit 35 where the removal mechanism designated generally at 36 lifts it and places it in the truck 37. The door 38 permits access to the interior of the main chamber 32 for the usual maintenance.

The gases produced by the combustion within the main chamber pass through the dual reburn tunnels 41 and 42 and through the further treating, recirculation, and heat removal stages 43. They eventually leave through the stack 44. Heat recovered from the incinerator system 30 may pass into the pipe 45.

In FIGURES 2 and 3, the reburn tunnels 41 and 42 include the respective first reburn stages 51 and 52 and respective second reburn stages 53 and 54. The burners 55 and 56 at the beginning of the first stages 51 and 52 maintain the temperatures in the tunnels 41 and 42 at the desired levels for proper operation. They also bring the reburn temperatures up to the proper levels at the each commencement of operation. In fact, environmental regulations often require that the incinerator achieve its operating temperatures prior to the introduction of the first amount of refuse whatsoever after a shut-down. The burners 55 and 56 assist in this task.

The blowers 57 and 58 provide air to the first stages 51 and 52 for combustion and the blowers 59 and 60 perform the same function for the second stages 53 and 54. The gases from the second stages 53 and 54 pass through the outlets 63 and 64.

As observed, the second reburn stages 53 and 54 have greater cross-sectional areas than the first reburn stages 51 and 52 of the tunnels 41 and 42, respectively. This allows the second reburn stages 53 and 54 to accommodate the greater volumes of gases resulting from the introduction of air and from the combustion of volitalized hydrocarbons within the tunnels 41 and 42. This represents one method of increasing the volume of the reburn tunnels from their inlets to the outlets. Other techniques accomplishing the same objective receive discussion below with reference to Figures 11 to 15.

After leaving the second stages 53 and 54, the gases then pass to the subsequent treating section 43 and mentioned above.

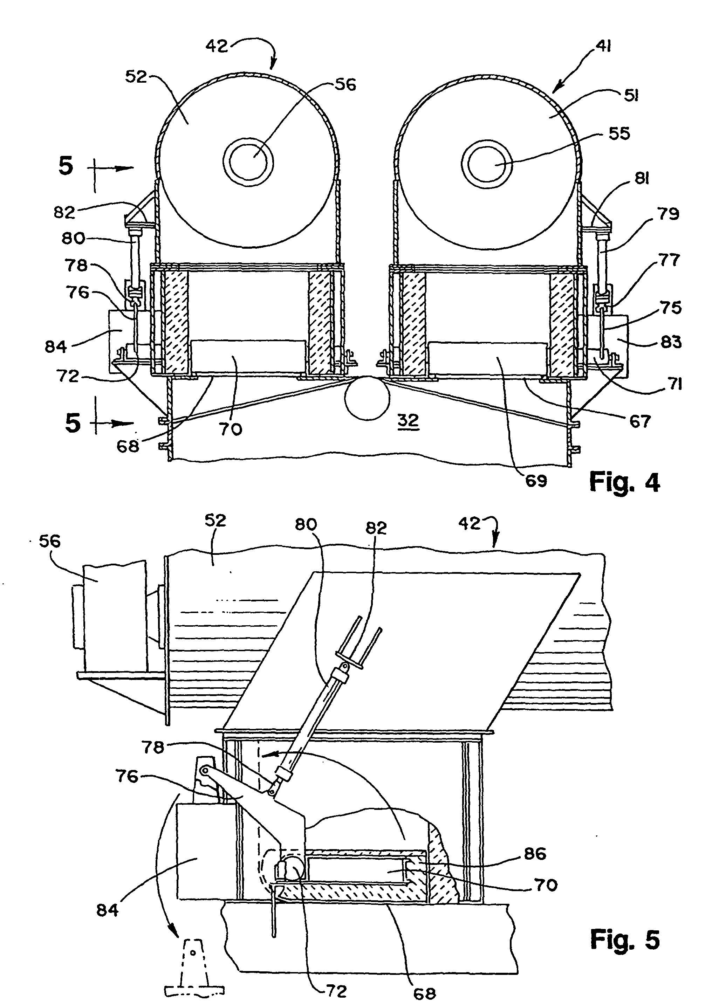

As seen in Figures 4 and 5, the gases from the main chamber 32 pass through the outlet openings 67 and 68 which also form the inlet openings to the reburn units 41 and 42, respectively. The dampers 69 and 70, when in the positions shown in FIGURES 3 to 5, cover the opening 67 and 68, respectively, and close them off. In operation, of course, at least one of the dampers 69 and 70 will remain open. When the main chamber 32 has sufficient combustible material inside, both will open and allow the gases to pass through to the reburn tunnels 41 and 42.

To accomplish their motion, the dampers 69 and 70 include the axial extensions 71 and 72. The lever arms 75 and 76 then connect ridgedly to the extensions 71 and 72. The rods 77 and 78 connect the lever arms 75 and 76 to the pistons 79 and 80 which attach ridgedly at their other ends to the brackets 81 and 82. The extension of the pistons 79 and 80 in Figures 3 to 5, especially the last, will induce the rotation of the lever arm 76 and its counterpart not shown about the center of the axis 72 to result in the opening of the dampers 69 and 70.

The counterweights 83 and 84 rotationally coupled to the other ends of the lever arms 75 and 76. They counterbalance the weight of the dampers 69 and 70 and facilitate their controlled motion.

A significant part of the weight of the dampers 69 and 70 results from their having a covering of the refractory 86 as shown in FIGURE 5. This, of course, provides protection against the high temperatures and corrosiveness of the gases passing around them.

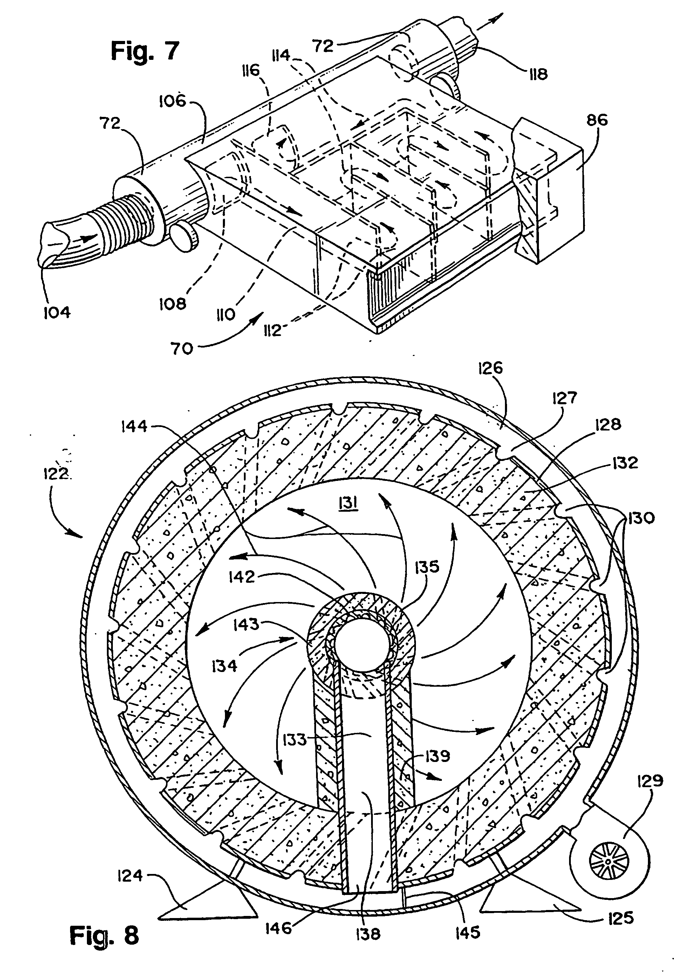

To help further protect the damper 69 and 70, they include air channels as discussed below with reference to FIGURE 7. The passage of air through the dampers 69 and 70 keeps them at a low enough temperature to prevent their destruction.

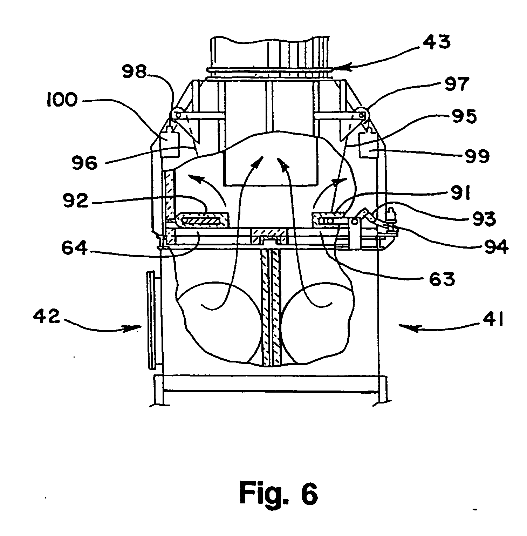

Similarly, the dampers 91 and 92 cover the outlet opening 63 and 64 of the reburn tunnels 41 and 42, respectively. As shown in FIGURE 6, however, the dampers 91 and 92, even when in the closed position as shown there, only cover up to about a maximum of about 60 percent of the outlet opening 63 and 64. When closed, they retain the gases within the reburn tunnels 41 and 42 for a longer time to assure their complete combustion. Typically such retention becomes desirable when the tunnels 41 and 42, and often, the main chamber 32, operate upon substantially less than the maximum amount of refuse or combustion gases than the system can handle.

The dampers 91 and 92 operate independently of each other depending upon the conditions in the respective reburn tunnels 41 and 42. They may, for example, submit to the control of temperature sensors placed within their respective tunnels. A lowering temperature may indicate the need to close the appropriate damper to retain the heat within the respective tunnel. Alternately, when the incinerator system produces steam, the damper control may measure the steam pressure produced by the system. A declining steam pressure may indicate a smaller quantity of heat within the system. This would provide an indication that either or both of the dampers 91 and 92 should close at least to some extent.

The dampers 91 and 92 in FIGURE 6 not only have the totally open or totally closed positions. They may also occupy intermediary locations to effectively block the outputs 63 and 64 by an amount less than the maximum closure that the dampers can achieve.

The movement of the damper 91 appears in FIGURE 6 under the action of the lever arm 93 connected to the piston 94 which effectuates the desired movement between opening and closing. The cable 95 attaches to the damper 91, passes over the pully 97 and connects to the weight 99 to counterbalance the weight of the damper 91. Only the cable 96, the pully 98, and the weight 100 appear in FIGURE 6 for the tunnel 42.

The choke dampers 91 and 92 serve to retain the gas within the reburn tunnels 41 and 42 for a greater period of time. In other words, it slows down the passage of the gas through these chambers. To achieve the desired combustion, the gas speed should typically not exceed about 55 feet per second. To assure proper combustion, the gas should move no faster than about 46 feet per second.

The dampers 91 and 92, as shown, take the form of rectangular blocks that pivot to open and close. Alternately, as square blocks, they may slide sideways into the position where they partially close the outlet openings 63 and 64. They reopen them by sliding sidewaysin the opposite direction. In fact, they may even slide through an opening in the exterior wall of the incinerator system for this purpose.

As a further alternate, the choke dampers at the ends of the reburn tunnels 41 and 42 may take the form of butterfly valves. This would give them either a round or rectangular configuration located within the outlets of the reburn units. They would then pivot about their centers to partially close or open the reburn's outlets. In the latter configuration, they would remain within the opening but present their edges of minimal area to avoid substantial interference with the passage of the gases.

FIGURE 7 shows a typical damper, for example, the closure 70 to the outlet opening 68 to the second reburn tunnel 42 seen in FIGURE 5. In FIGURE 7, a supply of air passes through the damper 70 to keep its temperature from rising to a point where it could suffer serious damage from the heated environment from which it operates. As seen from FIGURE 5, the ends of the axial extensions 72 sit on the outside of the tunnel 42.

The extensions 72 have hollow interiors which permits the passage of gas through them. To provide the cool gas, the flexible tube 104 connects to the nearer axial extension 74 to provide a source of cool gas. The cool gas travels through the interior of extension 72 into the axis 106 and out the opening 108 into the chamber 110. It then follows a path created by the dividers 112 and indicated by the arrows 114. Eventually it reaches the opening 116 in the axis 106 where it passes out through the other axial extension 72 and in it to the flexible tube 118.

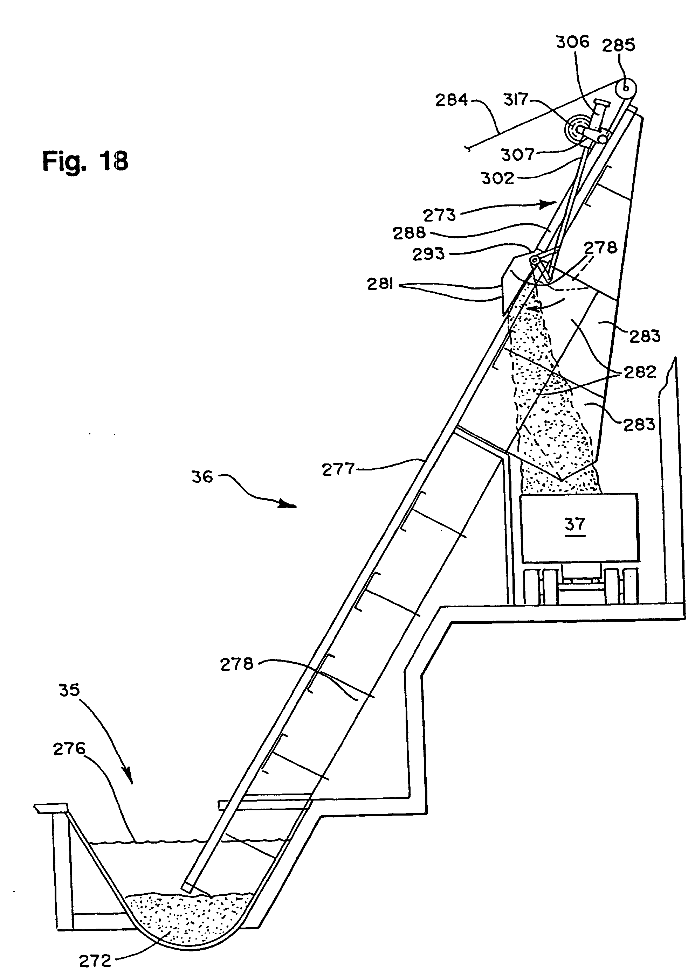

FIGURE 18 shows a reburn tunnel generally at 123 which may serve as either of the sections 51 or 53 of the reburn tunnel 41 or the sections 52 and 54 of the reburn tunnel 42. The tunnel 123 sits generally on the supports 124 and 125. The outer skin 126 surrounds the tunnel 123 and forms the plenum 127 in conjunction with the wall 128. The blower 129 places air in the plenum 127 under pressure. From there, the air may pass through the nozzles 130 which take it into the interior 131 of the reburn tunnel 123. The refractory 132 covers the interior wall 128 and the nozzles 130 to protect them from the heat and the corrosive environment of the interior 131 of the tunnel 123. Additionally, the air within the plenum 127 may pass through the support 133 and into the excitor 134 located in the tunnel's interior 131. From there it passes through the nozzles 135 and into the interior 131 where it helps support combustion.

The support 133 itself includes the inner wall 138 generally having a metalic composition. The refractory 139 surrounds the wall 138 to protect it from the tunnel's environment. Conveniently, the support 133 may have a rectangular cross section on planes parallel to the surface on which the tunnel sits. This will provide it with maximum cross-sectional area for the amount of the interference in the gas flow in the tunnel that it creates.

Similarly, the excitor 134 protects its inner metal wall 142 from corrosion and heat damage with the refractory covering 143. The nozzles 135 pass through the refractory 143.

As seen in FIGURE 8, air leaving the nozzles 135 does so with a tangential component of velocity. In other words, the nozzles 135 make an angle with the radii from the center of the excitor 134. Forty five degrees represents a desirable angle.

The gas emanating from the nozzles 135 with the tangential component of velocity follows the path generally shown by the arrows 144. This tangential movement of the air causes it to efficiently and effectively mix with the combustible gases contained in the tunnel's interior 131. Further, the nozzles 135 as well as the outer nozzles 130, will generally introduce the air with an axial component of velocity. In other words, the nozzles point downstream. The velocity of the gases leaving the nozzles may in fact make a 45 degree relative to the axial, or downstream, direction.

Additionally, the nozzles 135 may appear on the excitor 134 in rows in passing from the inlet to the outlet. To further assist the creation of the desired turbulence within the interior 131, the nozzles may have a staggered configuration from row to row to provide a more even air supply and turbulence.

The construction shown in FIGURE 8 may undergo modifications for different purposes. Thus, plugging the nozzles 130 will result in all of the air from the plenum 127 passing around the wall 128, through the support 133, into the excitor 134, and out of the nozzles 135 into the tunnel's interior 131. This appears to have a beneficial effect in creating the turbulence necessary for combustion.

Additionally, placing a barrier at the location 145 between the outer wall 126 and the plenum wall 128 will cause the air from the blower 129 to pass around substantially all of the plenum 127 before it reaches the inlet 146 to the support 133. This will have the effect of cooling the wall 128 with the air prior to its introduction into the interior 131. Furthermore, warming the air helps maintain the temperature inside the tunnel 123 at the necessary levels for combustion.

Alternately, the excitor 134 may have no nozzles on it whatsoever. In this eventuality, all the air entering the tunnel's interior 131 will pass through the nozzles 130 on the reburn unit 123 itself. Nonetheless, the excitor must still have some air passing through it from one support to the other. This provides a cooling effect to prevent the heat within the reburn tunnel 123 from destroying the excitor 134.

With or without nozzles, the excitor 134 serves additional purposes. The heat created within the interior 131 of the tunnel 123 itself helps to support the combustion of the gases inside. The heat near the middle of the interior 131 will pass into the refractory surface 143 of the excitor 134. From there it will radiate back into the interior 131 where it will help excite combustion.

To provide the reradiation of heat absorbed, the wall of the excitor 134 should permit very little of the heat to pass through. Thus, it should have a low thermal conductivity constant k, generally less than about 60. Preferably, the conductivity constant k, as defined above, will not exceed about 24.

Furthermore, the air entering the interior 131 must create turbulence in order to accomplish combustion. The excitor 134 reduces the maximum dimension of the space in the interior of the tunnel 123. Thus, air entering the interior 131 has a much shorter distance to travel to reach the combustible gasses. Thus it can more effectively create the required turbulence for combustion because of the presence of the excitor 134.

Desirably, the space between the outer surface of the refractory 143 of the excitor 134 and the inner surface of the refractory 132 covering the outer wall 128 should remain constant all around the excitor 134. This permits the most efficient mixing and turbulence of the oxygen introduced into the tunnel's interior 131. In the case of a circular reburn tunnel as shown in FIGURE 8, this would result in the interior 131 assuming an annular configuration.

In the case of an incinerator system with a single reburn tunnel, a single excitor would obviously suffice. For a system having twin reburn tunnels as shown in FIGURES 1 to 6, either or both of the tunnels may include an excitor. The latter, of course, represents the most desired configuration.

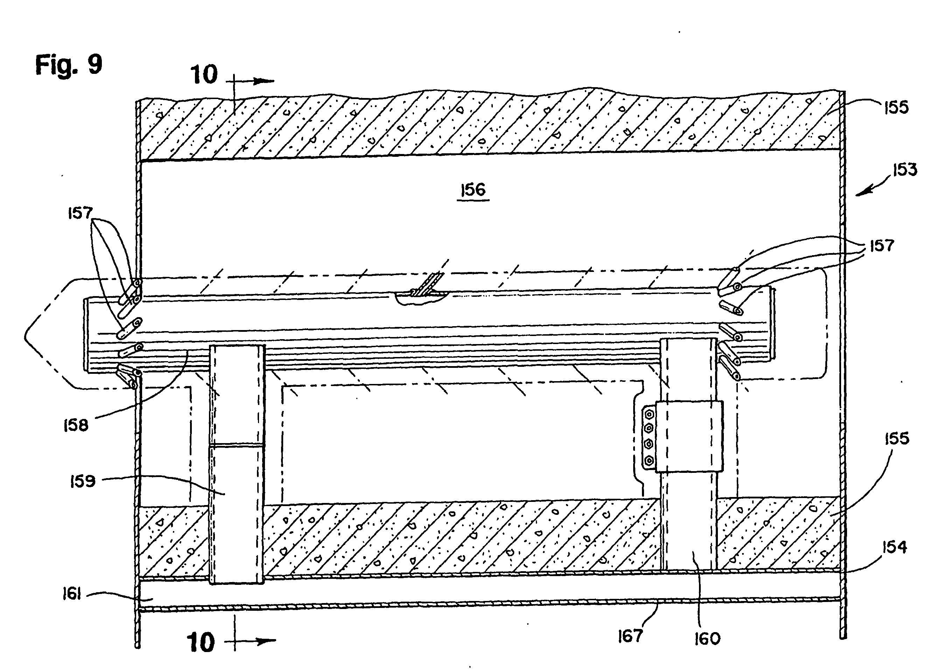

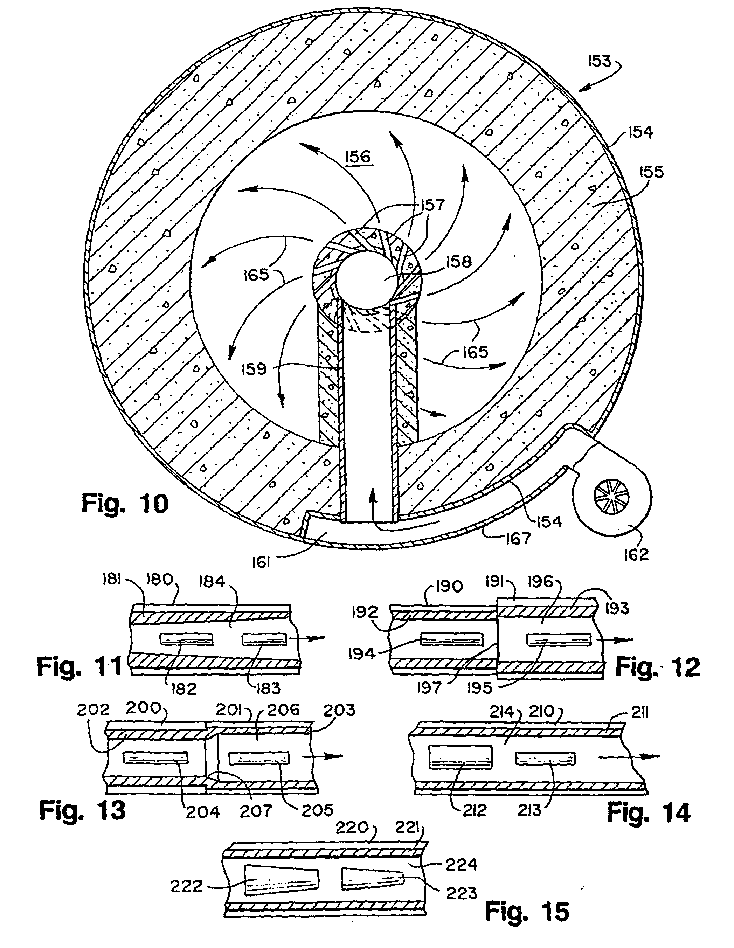

FIGURE 9 shows generally a portion of a reburn tunnel 153 which may, in fact, represent part of either of the reburn tunnels 41 or 42. The outer wall 154 includes the refractory covering 155 but no nozzles passing through it. Rather, all of the air entering the interior 156 of the tunnel 153 passes through the nozzles 157 on the excitor 158. That air, as before, enters the excitor 158 through its supports 159 and 160 and, eventually from the plenum 161. As seen in FIGURE 10, the blower 162 provides the air under pressure which eventually passes through the nozzles 157 into the interior 156.

As before, the nozzles 157 introduce the air with an axial component of velocity. Stated in other words, the air is introduced at least partially in the direction from the inlet of the reburn section 153 to the outlet, or in the direction from the first support 159 towards the second support 160. As in FIGURE 9, that angle generally amounts to about 45 degrees.

Furthermore, as shown in both FIGURES 9 and 10, the nozzles impart a tangential as well as a radial component of velocity to the air passing through them. Again, the nozzles will introduce the air at an angle of about 45 degrees relative to the radial direction. Thus, half of the non-axial velocity of the gases will move them outward and the other half moves them around the interior 156. The result appears in FIGURE 10 where the arrows 166 show the general vorticity to the direction of movement of the air.

The plenum 161 does not extend the entire circumference of the reburn tunnel 153. Rather, it only goes from the blower 162 to the support 159. The outer wall 167, along with the wall 154 attached to the refractory 155, creates the plenum 161. FIGURE 11 gives a diagram of a section of a reburn tunnel having the outer wall 180, the refractory 181 and the two excitor sections 182 and 183. The arrow indicates the direction of the gas movement as in FIGURES 12 to 15. The excitors 182 and 183 have the same, constant cross-sectional area. However, the cross-sectional area of the interior 184 increases in the direction of the gas movement because the refractory wall 181 slopes outward. This permits the reburn section to accommodate the increasing amounts of air introduced either through the wall 181 or the excitors 182 and 183. In FIGURE 11, the cross-sectional area of the interior 184 increases gradually because of the gradual slope of the refractory wall.

In FIGURE 12 appears another reburn section. It too has the outer wall 190 and 191, the refractory 192 and 193, and the excitor sections 194 and 195. As shown there, the interior 196 experiences a sharp, discontinuous increase at the juncture 197. This may, for example, represent the juncture between two separate reburn stages as shown in FIGURES 2 and 3 and discussed above.

FIGURE 13 again shows a reburn section having the outer wall 200 and 201, refractory sections 202 and 203 and excitor sections 204 and 205. There, the interior volume 206 increases gradually at the juncture 207 between the two sections. However, the sloping wall at the juncture 207 results in less adding another undesired turbulence than the very sharp discontinuity 197 shown in FIGURE 12.

Another reburn section appears in FIGURE 14 and includes the outer wall 210, the refractory 211, and the excitor sections 212 and 213. The smaller cross-sectional area of the excitor 213 as compared to the excitor 214 results in an increase in the cross-sectional area 214 of the interior as the gas travels from the excitor 212 to the excitor 213.

Finally, FIGURE 15 shows the reburn section with the walls 220 and 221 and the excitor sections 222 and 223. The conic shape of the excitor sections 222 and 223 results in a gradual increase of the volume of the gas as it passes across them in the interior 224.

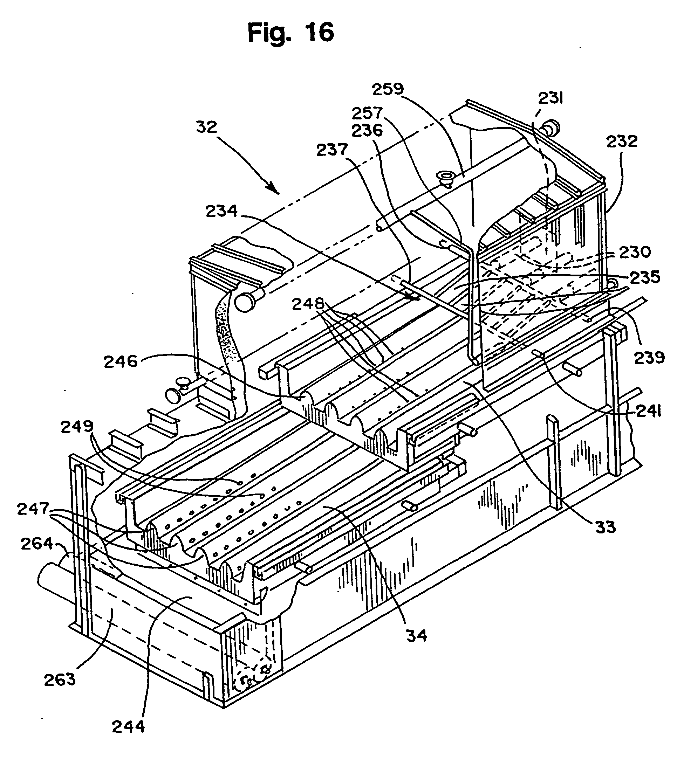

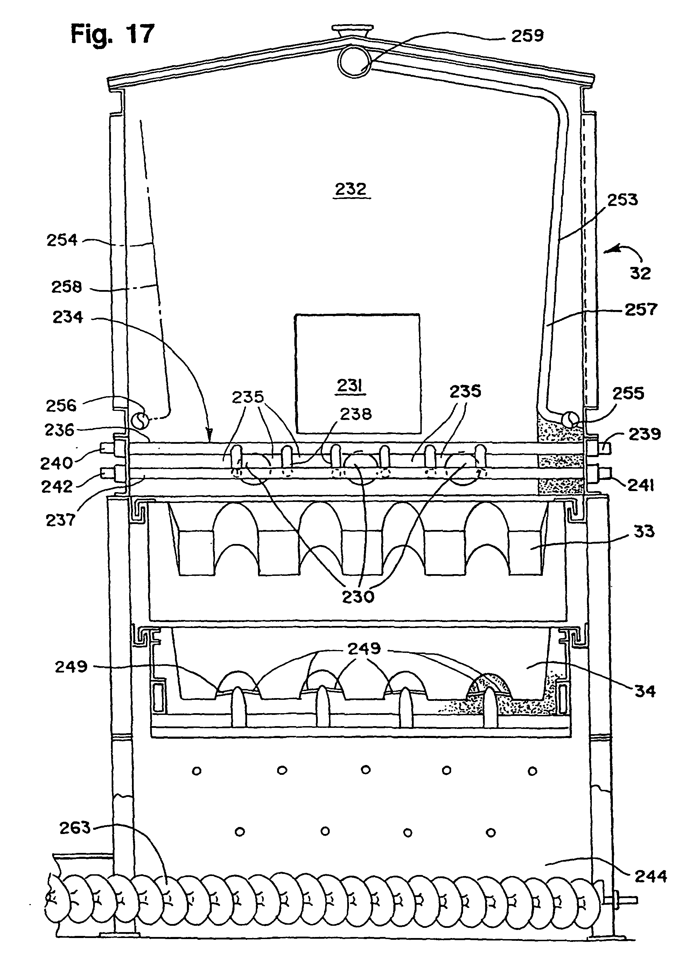

The initial combustion of the refuse, of course, takes place in the main chamber 32 as seen in Figures 16 and 17. The screw feeders 230 may assist in the introduction of particulate refuse such as rice hulls. More typically, bulk refuse enters through the opening 231 in the forewall 232. In any event, the bulk refuse entering the incinerator 32 sits upon the grate generally at 234. It will rest there briefly to permit combustion to commence.

If the refuse has a high moisture content, it may undergo drying while it rests upon the grate 234 to permit its more facile subsequent burning. If, upon entering, it immediately sat upon the hearth 33, it would experience greater difficulty in drying in order to undergo subsequent combustion.

Alternately, a very high energy (Btu) content material such as plastics may burn at very high temperatures. If this occurred on the floor 33, the uneven heating could cause slagging of the floor itself.

Thus, the refuse sits upon the grate 234, for a limited period of time. However, the majority of the fixed hydrocarbons within the material should remain unburned when the refuse slips through or off the grate 234 and onto the floor 33. The volatile hydrocarbon content may well have, by this time, already entered the gas stream.

As shown in Figures 16 and 17, the grate 234, to permit the refuse to fall to the floor 33, will include the holes 235 passing through it. The size of the openings of the holes 235 generally lies in the range of 12 to 18 inches This permits most types of refuse to fall through to the floor prior to the burning of the majority of the fixed hydrocarbons.

The grate 234, of course, exists in the heated and corrosive environment of the main chamber 32. Thus, it should generally have some mechanism for cooling it to prevent its destruction by heat or corrosion. To effectuate this result, the grate 234 includes the hollow longitudinal pipes 236 and 237 and the cross pipes 238. The pipe 236 has the couplings 239 and 240 while the pipe 237 includes the couplings 241 and 242. This permits the passage through it of a fluid which will effectuate the cooling of the grate 234. The fluid thus introduced may take the form of air, water, steam, or oil.

Additionally, the pipes 236 to 238 of the grate 234 will have a refractory coating to provide further heat protection. Lastly, a wear surface composed typically of face hardened refractory will help protect the grate 234 from abrasion due to the refuse placed upon it.

The floor 33 may assume a number of forms. A particular and advanced type of pulsed hearth floor appears in Basic's U. S. Patent 4,475,469 mentioned above. Other types of floors may work also, displaying various degrees of desirability.

Thus, for example, the floor 33 may simply be form of a stationary hearth. Some form of a ram or other pusher would then typically move the refuse along until it burned into ashes which would then fall into an appropriate collector. Often, however, the floor will experience some form of movement to assist the burning refuse in traveling from the inlet to the outlet of the main chamber 32.

The floor 33 may often constitute a hearth, whether moving or stationary. Experience indicates that the former represents the preferred technique. The pulsating hearth, whether in the configuration shown in Basic's patent or otherwise has proved most efficient. In Basic's patent, the hearth experiences arcuate movement, in pulses, in the direction from the inlet 231 toward the outlet. It moves more rapidly in the former direction than the latter in order to toss the refuse along almost in a snow-shovel type movement.

The hearth floor 33 shown in FIGURE 16 has a shape that has proved beneficial in the burning of many types of refuse. Here, the floor inclines from the inlet 232 to the outlet ash pit 244. This slight lean built into the upper floor 33 and the lower floor 34 assists the refuse in moving in response to any motion experienced by the floors.

Additionally, the floors 33 and 34 include the ridges 246 and 247, respectively, on their upper surfaces. This helps channel and shuffle the refuse sitting there to aid in its combustion. The jets 248 on the upper floor 33 and 249 on the lower floor 34 provide under-fire air to assist combustion to the burning refuse.

As shown in FIGURE 17, the nozzles 249, as do the nozzles 248 of the upper floor 33, the lower floor 34, incline downwards as they introduce the air into the main chamber 32. This downward angle on the nozzles 249 and 248 helps prevent the entrance of particles of refuse into them which could result in their clogging.

The amount of air introduced through the nozzles 248 and 249 may vary depending upon the conditions within the incinerator system in general in the main chamber 32 in particular. Thus, as discussed above, the system may contain insufficient refuse to operate at or near capacity. Introducing in this case less air through these jets, may assist the entire incinerator system to reach or remain at its proper operating temperature.

Instead of the hearth floors 33 and 34, the main chamber 32 could include a grate floor underneath the grate 234. The refuse would fall from the upper grate to the lower grate and then undergo its full combustion. This lower grate may then either remain stationary or experience some type of movement to transfer the burning refuse in the direction of the ash pit 244.

This may work in conjunction with utilization of the choke dampers 91 and 92. One method of accomplishing the reduction of the air in the main chamber would simply involve turning off the air introduced in the second pulsating hearth floor 34.

The main chamber 32 includes the membrane sidewalls 253 and 254 which appear diagramatically in FIGURES 16 AND 17. In these walls, the water passes through the lower inlet pipes 255 and 256. From there it passes through the tubules 257 and 258 of the membrane walls 253 and 254 to the header pipe 259. From there it may travel elsewhere to provide useful energy in the form of steam for electricity, heating, or other purposes.

As discussed above, the main chamber may not have sufficient refuse to support the heat throughout the incinerator system. In this eventuality, the amount of heat taken out through the header 259 may suffer a reduction in order to leave sufficient heat within the main chamber and reburn tunnels to maintain the temperatures required for clean and efficient burning.

The ash pit 244 of the main chamber 32 includes the screw feeders 263 and 264. These remove ashes from the pit 244. However, as with other ash removal systems such as the chain drag system, the moving components of the screw feeders 263 and 264 sit under the water and in the ash pit where any repair proves difficult. A significantly improved type of ash removal system appears in FIGURES 18 to 25.

The ash pit 35 appears at the bottom of FIGURE 18. Typically, it will contain water 271 and the ashes 272 at the bottom. The water 271, of course, provides a seal between the interior of the main combustion chamber and the room atmosphere.

Naturally, from time to time the ashes 272 must undergo removal from the pit 35. To accomplish this objective, the scoop mechanism shown generally at 273 descends along the track 277 until the scoop 278, in the configuration shown in solid lines in FIGURE 18, enters the water 271 and digs into the ash heap 272. It then reverts to its carrying configuration shown in dashed lines in FIGURE 18 while remaining at the bottom of the pit 272. This allows the scoop 278 to capture a portion of the ashes 272.

The scoop mechanism 273 then rises along the track 277. Desirably, it will stop shortly after lifting the scoop 278 itself out of the water 271. The water entrained with the ashes 272 will then have an opportunity to drain through the openings 281 in the bottom of the scoop 278. The back of the track 277 forms a trough 278 which will guide the dripping water back into the pit 35.

When the mechanism 273 has returned to its elevated position as shown in FIGURE 18, the scoop 278 moves from its holding configuration shown in dashed lines to its release configuration shown in solid lines. The ashes then fall from the scoop 278 through the opening 282 in the trough 278 and into the truck 37 or other container. The side guards 283 keep the ashes from splattering outside of the truck 37.

The scoop mechanism 273 moves upward and downward under the influence of the cable 284. At one end, the cable 284 attaches to a typical winch which winds up and releases the cable 284 depending upon the winch's controls. In turn, the cable 284 passes over the pully 285 and attaches to the scoop mechanism 273. When the winch unwinds the cable 284, the latter passes over the pulley 285 and allows the scoop mechanism 273 to descend into the pit 35. When the winch winds up the cable 284, it pulls on the scoop mechanism 273 dragging it out of the water and up the track 277.

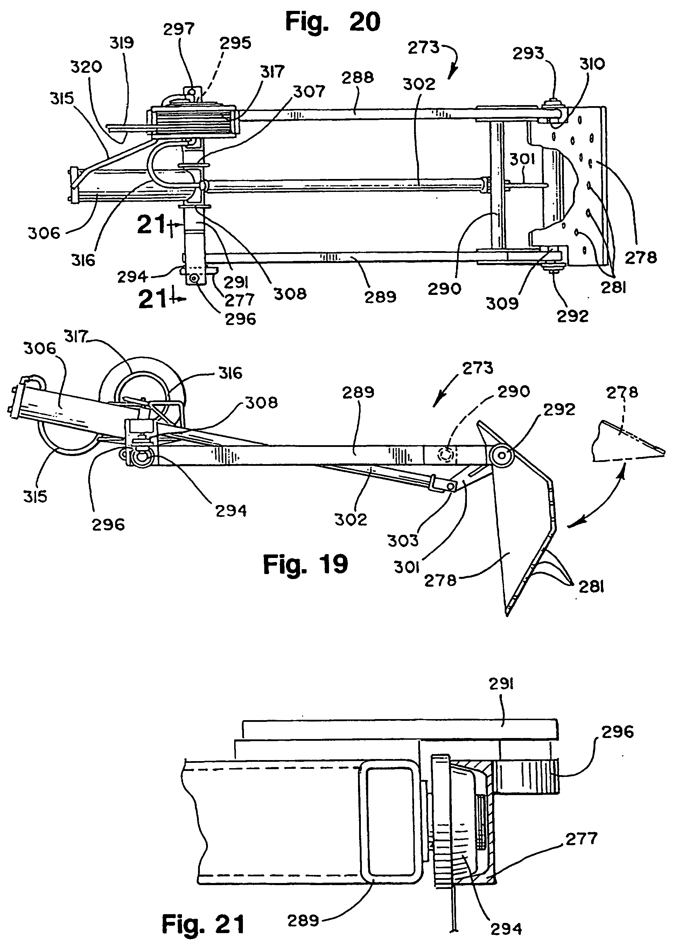

The scoop mechanism, or trolley, 273 appears in greater detail in FIGURES 19 and 20. The trolley 273 first consists of the rigid frame formed by the runner bars 288 and 289, and the front crossbar 290 and the rear crossbar 291 rigidly adhered to the runner bars 288 and 289. The front wheels 292 and 293 and the rear wheels 294 and 295 ride inside of the track 277 as shown in FIGURE 21. Further, the horizontal guide wheels 296 and 297 press against the tracks 277 from the outside of the rear wheels 294 and 295, respectively. This assures proper alignment of the trolley 273 on the track 277.

The arrangement of the guide wheels 296 and 297 has a further advantage in considering the use of the trolley 273 in removing ashes from the pit 35. Specifically, the rear wheels 294 and 295 riding inside of the track members 277 and the guide wheels 296 and 297 pressing against the side of the track members 277 largely orient the scoop mechanism 273 on the track 277. When the cable 284 allows the scoop 278 to descend into the pit 35, only the front end of the trolley 273 actually enters the water 271. The rear of the trolley 273, including the wheels 294 to 297, remain at all times outside of the water 271.

Thus, the wheels which must make intimate and proper contact with the track 277 to primarily orient the trolley 273 remain out of the water which could cause it to corrode or become impeded by debris within the water.

Keeping the rear of the trolley 273 out of the water has further advantages with regards to controlling the configuration of the scoop 278. The scoop 278 includes the ridgedly attached flange 301 to which the rod 302 pivotally connects at the juncture 303. The other end of the rod 302 connects to a piston contained within the cylinder 306. The piston 306 in turn pivotally connects to the flanges 307 and 308 on the rear crossbar 291.

When the pressure within the cylinder 306 forces its piston to move outward, it extends the bar 302 to the right in FIGURES 19 and 20. This in turn causes the flange 301 to move downward. As a consequence, the scoop 278 moves around its rotating couplings 309 and 310 to the side bars 288 and 289. This causes the scoop 278 to move from the position shown in solid in FIGURES 18 and 19 to that shown by the dashed lines.

Conversely, when the pressure within the cylinder retracts the piston, the bar 302 moves to the left of FIGURES 19 and 20 and pulls the connection 303 with the flange 301 in that same direction. This in turn causes the flange 301 and the scoop 278 to rotate in the clockwise direction from the position shown in phantom FIGURE 19 to that shown in solid lines. This moves the scoop from the releasing configuration to the holding configuration where it will retain ashes. This motion takes place, of course, with the scoop 278 in the pit 35 so that it may grab onto a portion of the ashes 272.

During the latter, or grabbing, type of motion, the scoop 278 may contact a solid object in the pit 35. This happens since the incinerator system 30 accepts bulk refuse without presorting. A common item that may find its way into the pit 35 is a muffler or other solid discard. Desirably, the cylinder 306 should not attempt to force the movement of the scoop 278 any further. Thus, in this intermediate configuration, the scoop 278 will remain in contact with the solid object.

As the trolley 273 then moves up the track 277, it will drag the solid object with it. At its top position, the scoop 278 will again move to its release position and drop the muffler or other solid item into the truck 37. The use of pneumatic controls for the cylinder 306 will provide it with this cushioning or flexibility to allow it to remove such solid objects without damage to itself or the track 277.

As further assistance, the controls may actually reduce the pressure within the cylinder 306 once the scoop 278 contacts the solid object within the pit 35. This provides additional assurance that the solid object will not damage any component of the ash removal system.

The fluid for controlling the cylinder 306 passes through the hoses 315 and 316 which in turn wrap around the reel 317. As the trolley 273 moves up and down the track 277, the reel 317 releases and recaptures the midportions 319 and 320 of the hoses to keep them out of the way of the trolley 273.

Again, with the trolley 273 in its lowest position where the scoop 278 enters the pit 35, the cylinder 306 and the reel 317 remain out of the water. They thus avoid the deleterious effects of the water, the ashes, and the chemicals contained in both of them. Furthermore, the winch operating the cable 284, as appears from FIGURE 18, will always remain out of the water.

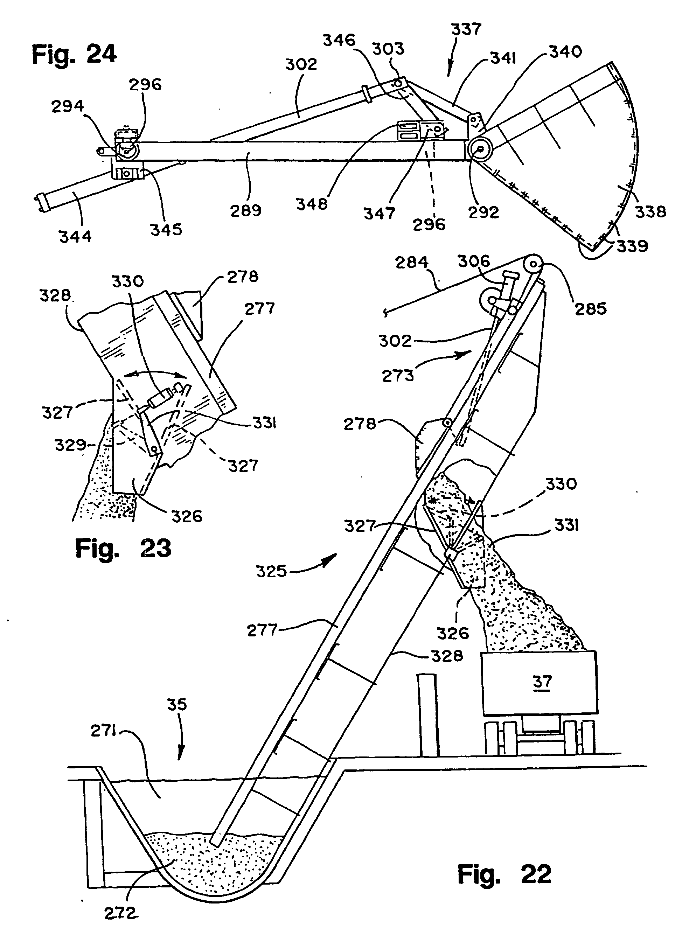

FIGURE 22 shows the track mechanism generally at 325, but with a slightly different chute mechanism for delivering the ashes into the truck 37. The track 277 and the trolley 273 remain virtually the same as before.

However, the track 325 includes the rotating chute guide 326 which assumes the configuration shown in FIGURE 22 with the trolley 273 near the top of the track. Then the scoop 278 moves from its retaining to its releasing configuration. When this occurs and the ashes drop from the scoop, the chute guide 326 directd the ashes to the truck 37. After the ashes have entered the truck 37, the chute guide 326 rotates in the counterclockwise direction shown in FIGURE 22 so that its shovel 327 forms a portion of the trough 328.

The mechanism for controlling the rotating chute guide 326 appears more clearly in FIGURE 23 which shows the opposite side of the track 325 from that seen in FIGURE 22. As seen there, the operation of the rotating track portion 327 of the chute 326 results from the influence of the cylinder 330. When the cylinder 330 forces out its piston, the latter connects to the lever arm 331 rigidly attached to the rotating track portion 327. In that instance, the lever arm 331 will take the position shown in phantom and the track portion 327 will connect with the remaining of the chute 328.

When the piston 330 contracts, it pulls the lever arm 331 to the right to the position shown in FIGURE 23 resulting in the track portion 327 rotating clockwise. This causes the debris from the scoop 278 to fall through to the truck 37.

An alternate type of scoop mechanism appearing generally at 337 in FIGURE 24. It utilizes the same trolly as in FIGURES 19 and 20. Thus, it includes the same runner bars 288 and 289 with the crossbars 290 and 291. It moves along the track in the same manner as described previously utilizing the wheels 292 to 297.

This trolley employs, instead of the scoop 278 shown in the prior figures, the bucket 338 which has the holes 339 for water to pass through. The bucket 338 has a rotational coupling at the juncture 292 and the flange 340 which controls its configuration. The flange 340 in turn connects to the lever arm 341 which attaches to the usual bar 302. In turn, the bar 302 connects to a piston within the hydraulic cylinder 339. The cylinder 339, in turn, has a pivotal coupling to the flange 340 which must be added to the trolley 273 as of FIGURES 19 and 20.

To assure the proper movement of the bar 302 and the lever arm 341, the bar 302, at its juncture 303, also couples to the lever arm 346. The latter pivotally couples to the flange 347 attached by the braces 348 to the crossbar 290. The lever arm 346 thus assures the correct rotational motion of the juncture 303 and, concomitantly, the scooping movement of the bucket 338.

In operation, the extension of the rod 302 by the cylinder 344 will cause the bucket 338 to rotate in the clockwise direction in FIGURE 24. In this configuration, it will not hold debris. The trolley 333 then descends into the water with the bucket 338 travelling between the track 277 and the trough 328.

When the bucket 338 reaches the bottom of the pit 35, the cylinder 344 retracts the bar 302. Under the influence of the lever arms 341 and 346, this causes the bucket 338 to rotate in the counterclockwise direction in FIGURE 24. In effect, this induces the bucket, when in the pit, to move forward to scoop up ashes.

The trolley 337 then moves up the track 277. Then the cylinder extends the rod 302, and the bucket rotates in the clockwise direction of FIGURE 24 and dumps its contents.

The use of the bucket 338 would appear warranted in situations producing heavy ash or debris such as gravel undergoing decontamination in the incinerator system. The stronger, hydraulic cylinder 344 would give the bucket 338 additional force to dig out the contents of the pit 35.

In comparison, the back hoe scoop 278 shown in FIGURES 19 and 20 would appear more desirable for the usual municipal waste. There the scoop 278 may have to stop its motion in the forward direction when contacting a solid object l"like a muffler or a bicycle. The pneumatic cylinder 306 has a greater cushioning to permit the scoop 278 to stop its motion when it makes the contact and yet not destroy either the cylinder 306 or the scoop 278. Furthermore, the valving for the cylinder 306 may reduce the pressure should the scoop 278 contact such a solid object. This helps avoid destruction in many of the components of the trolley 273 or the track 277.

Switching between the scoop 278 and the bucket 338 requires only minimal effort. Naturally, to carry the latter, the trolley should include the brackets 345 and 347. Otherwise, switching between the two mechanisms simply involves exchanging the cylinders 306 and 344 and the scoop 278 with the bucket 338. Additionally, the bucket 338 requires the lever arms 341 and 346 while the scoop 278 does not use any such lever arm. Thus, the ash removal system may employ either type of scoop depending upon the refuse placed into the incinerator.

## Claims

1. A method of burning refuse comprising:
(1) Placing refuse through an inlet opening (231) into an enclosed main chamber (32) of an incinerator system and onto a grate means (234) located within said main chamber and above a fire resistant floor means (33,34), said grate means having openings (235) passing therethrough;
(2) partially burning said refuse while on said grate means;
(3) placing said refuse onto said floor means; and
(4) continuing the burning of said refuse while on said floor means, **characterized by** passing said refuse through said openings in said grate means while said refuse continues to burn but still contains a majority of the fixed hydrocarbons that it had when entering said main chamber.

2. The method of Claim 1 further **characterized by** cooling said grate means by passing a fluid through it.

3. The method of Claim 2 further **characterized** wherein said fluid is selected from the group consisting of oil, air, water or steam.

4. The method of Claim 1 further **characterized by** cooling said grate means by passing air through said grate means and then through nozzles coupled to said grate means.

5. An incinerator system (30) in combination with bulk refuse, containing hydrocarbons, for burning in the incinerator system, the incinerator system comprising an enclosed main chamber (32) having a fire-resistant hearth (33,34) for holding and burning said bulk refuse thereon and a side wall (232), an inlet opening (231) located in said side wall for the introduction of said bulk refuse and an outlet opening (67, 68) for the egress of the gaseous products of combustion from said main chamber, and grate means (234) located within said main chamber, adjacent to said inlet opening, and above said hearth for holding said bulk refuse newly introduced through said inlet opening above said hearth, **characterized by** said grate means including openings (235) therethrough being of a size allowing said grate means to hold said refuse for a limited period of time and then allowing said refuse to drop through said openings to said hearth while burning and while still containing a majority of the fixed hydrocarbons originally in said refuse.

6. The incinerator system and bulk refuse of Claim 5 further **characterized by** said openings (235) in said grate means being of a size of about 305 to 457 mm (12 to 18 inches).

7. The incinerator system and bulk refuse of Claim 5 or 6 further **characterized by** means (236, 237, 238, 239, 240, 241, and 242), coupled to said grate means, for reducing the temperature of said grate means.

8. The incinerator system and bulk refuse of any one of Claims 5 to 7 further **characterizing by** said grate means being provided with a refractory coating and a wear surface protecting said grate means from abrasion.

9. The incinerator system and bulk refuse of any one of Claims 5 to 8 further **characterized by** said hearth being substantially flat with raised ridges (246, 247) running in the direction from said inlet opening to said outlet opening.

10. The incinerator system and bulk refuse of any one of claims 5 to 9 further **characterized by** said hearth being higher near said inlet opening than near said outlet opening.

11. The incinerator system and bulk refuse of any one of claims 5 to 10 further **characterized by** nozzles (248, 249) located within a floor of said hearth and means, coupled to said nozzles, for introducing air through said nozzles into said main chamber, said nozzles being inclined in the downward direction.

## Patentansprüche

1. Verfahren zum Verbrennen von Abfall, umfassend:
(1) Leiten von Abfall durch eine Einlassöffnung (231) in eine umschlossene Hauptkammer (32) eines Verbrennungsofensystems und auf ein Gittermittel (234), das in der Hauptkammer und über einem feuerbeständigen Bodenmittel (33, 34) angeordnet ist, wobei das Gittermittel durch es hindurch laufende Öffnungen (235) aufweist;
(2) teilweises Verbrennen des Abfalls, während dieser sich auf dem Gittermittel befindet;
(3) Anordnen des Abfalls auf dem Bodenmittel und
(4) Fortsetzen des Verbrennens des Abfalls, während dieser sich auf dem Bodenmittel befindet, **dadurch gekennzeichnet, dass** der Abfall durch die Öffnungen in dem Gittermittel geleitet wird, während der Abfall weiter verbrennt, aber noch immer einen Großteil der festen Kohlenwasserstoffe enthält, die er aufwies, als er in die Hauptkammer eintrat.

2. Verfahren nach Anspruch 1, weiterhin **gekennzeichnet durch** Abkühlen des Gittermittels **durch** Leiten eines Fluids **durch** dieses.

3. Verfahren nach Anspruch 2, weiterhin **gekennzeichnet dadurch, dass** das Fluid aus der Gruppe bestehend aus Öl, Luft, Wasser oder Wasserdampf ausgewählt wird.

4. Verfahren nach Anspruch 1, weiterhin **gekennzeichnet durch** Abkühlen des Gittermittels **durch** Leiten von Luft **durch** das Gittermittel und dann **durch** Düsen, die mit dem Gittermittel verbunden sind.

5. Verbrennungsofensystem (30) in Kombination mit Massenabfall, der Kohlenwasserstoffe enthält, zum Verbrennen im Verbrennungsofensystem, wobei das Verbrennungsofensystem eine umschlossene Hauptkammer (32) umfasst, die ein feuerbeständiges Gestell (33, 34) zum Halten und Verbrennen des Abfallstoffs darauf und eine Seitenwand (232), eine Einlassöffnung (231), die in der Seitenwand zum Einführen des Massenabfalls angeordnet ist, und eine Auslassöffnung (67, 68) zum Abziehen der gasförmigen Verbrennungsprodukte aus der Hauptkammer und Gittermittel (234), die in der Hauptkammer neben der Einlassöffnung und über dem Gestell zum Halten des Massenabfalls, der neu durch die Einlassöffnung über dem Gestell eingeführt wurde, aufweist, **dadurch gekennzeichnet, dass** das Gittermittel Öffnungen (235) durch es hindurch enthält, die eine Größe aufweisen, die es ermöglicht, dass das Gittermittel den Abfall einen begrenzten Zeitraum lang hält, und dann ermöglicht, dass der Abfall durch die Öffnungen auf das Gestell fällt, während er verbrennt und noch immer einen Großteil der ursprünglich sich im Abfall befindenden festen Kohlenwasserstoffe enthält.

6. Verbrennungsofensystem und Massenabfall nach Anspruch 5, weiterhin **gekennzeichnet dadurch, dass** die Öffnungen (235) im Gittermittel eine Größe von etwa 305 bis 457 mm (12 bis 18 Zoll) aufweisen.

7. Verbrennungsofensystem und Massenabfall nach Anspruch 5 oder 6, weiterhin **gekennzeichnet durch** Mittel (236, 237, 238, 239, 240, 241 und 242), die mit dem Gittermittel verbunden sind, zum Verringern der Temperatur des Gittermittels.

8. Verbrennungsofensystem und Massenabfall nach einem der Ansprüche 5 bis 7, weiterhin **gekennzeichnet dadurch, dass** das Gittermittel mit einer feuerfesten Beschichtung und einer Verschleißschicht, die das Gittermittel vor Abrieb schützt, ausgestattet ist.

9. Verbrennungsofensystem und Massenabfall nach einem der Ansprüche 5 bis 8, weiterhin **gekennzeichnet dadurch, dass** das Gestell im Wesentlichen flach mit erhöhten Kanten (246, 247) ist, die in der Richtung von der Einlassöffnung zur Auslassöffnung laufen.

10. Verbrennungsofensystem und Massenabfall nach einem der Ansprüche 5 bis 9, weiterhin **gekennzeichnet dadurch, dass** das Gestell in der Nähe der Einlassöffnung höher ist als in der Nähe der Auslassöffnung.

11. Verbrennungsofensystem und Massenabfall nach einem der Ansprüche 5 bis 10, weiterhin **gekennzeichnet durch** Düsen (248, 249), die in einem Boden des Gestells angeordnet sind, und Mitteln, die mit den Düsen verbunden sind, zum Einführen von Luft **durch** die Düsen in die Hauptkammer, wobei die Düsen nach unten geneigt sind.

## Revendications

1. Procédé de combustion des déchets consistant à
(1) faire passer les déchets par une ouverture d'entrée (231) dans une chambre principale fermée (32) d'un système incinérateur et sur un moyen formant grille (234) situé dans ladite chambre principale et au-dessus d'un moyen formant sol résistant au feu (33, 34), ledit moyen formant grille comportant des ouvertures (235) qui le traversent ;
(2) brûler partiellement lesdits déchets pendant qu'ils sont sur ledit moyen formant grille ;
(3) placer lesdits déchets sur ledit moyen formant sol ; et
(4) continuer la combustion desdits déchets pendant qu'ils sont sur ledit moyen formant sol, **caractérisé par** le passage desdits déchets par lesdites ouvertures dans ledit moyen formant grille pendant que lesdits déchets continuent de brûler mais contiennent encore une majorité des hydrocarbures fixes qu'ils contenaient lorsqu'ils sont entrés dans ladite chambre principale.

2. Le procédé selon la revendication 1, **caractérisé en outre en ce qu'**un fluide traverse ledit moyen formant grille pour le refroidir.

3. Le procédé selon la revendication 2, **caractérisé en outre en ce que** ledit fluide est sélectionné dans le groupe comprenant l'huile, l'air, l'eau et la vapeur.

4. Le procédé selon la revendication 1, **caractérisé en outre par** le refroidissement dudit moyen formant grille par le passage d'air à travers ledit moyen formant grille puis à travers des buses couplées audit moyen formant grille.

5. Système incinérateur (30) combiné à des déchets en vrac, contenant des hydrocarbures, devant être brûlés dans le système incinérateur, le système incinérateur comprenant une chambre principale fermée (32) ayant un foyer résistant au feu (33, 34) pour y contenir et y brûler lesdits déchets en vrac et une paroi latérale (232), une ouverture d'entrée (231) située dans ladite paroi latérale pour l'introduction desdits déchets en vrac et une ouverture de sortie (67, 68) pour la sortie des produits gazeux de la combustion de ladite chambre principale, et un moyen formant grille (234) situé à l'intérieur de ladite chambre principale, à proximité de ladite ouverture d'entrée, et au-dessus dudit foyer pour retenir lesdits déchets en vrac qui viennent d'être introduits par ladite ouverture d'entrée au-dessus dudit foyer, **caractérisé en ce que** ledit moyen formant grille comprend des ouvertures (235) qui le traversent et sont d'une taille permettant audit moyen formant grille de retenir lesdits déchets pendant une durée limitée puis permettant auxdits déchets de tomber à travers lesdites ouvertures dans ledit foyer tout en brûlant et pendant qu'ils contiennent encore une majorité des hydrocarbures fixes présents à l'origine dans lesdits déchets.

6. Le système incinérateur et les déchets en vrac selon la revendication 5, **caractérisés en outre en ce que** lesdites ouvertures (235) dans ledit moyen formant grille sont d'une taille d'environ 305 à 457 mm (12 à 18 pouces).

7. Le système incinérateur et les déchets en vrac selon la revendication 5 ou 6, **caractérisés en outre par** des moyens (236, 237, 238, 239, 240, 241 et 242) couplés audit moyen formant grille pour réduire la température dudit moyen formant grille.

8. Le système incinérateur et les déchets en vrac selon l'une quelconque des revendications 5 à 7, **caractérisés en outre en ce que** ledit moyen formant grille est muni d'un revêtement réfractaire et d'une surface d'usure protégeant ledit moyen formant grille de l'abrasion.

9. Le système incinérateur et les déchets en vrac selon l'une quelconque des revendications 5 à 8, **caractérisés en outre en ce que** ledit foyer est essentiellement plat et comporte des nervures en relief (246, 247) disposées dans la direction de ladite ouverture d'entrée à ladite ouverture de sortie.

10. Le système incinérateur et les déchets en vrac selon l'une quelconque des revendications 5 à 9, , **caractérisés en outre en ce que** ledit foyer est plus haut près de ladite ouverture d'entrée que près de ladite ouverture de sortie.

11. Le système incinérateur et les déchets en vrac selon l'une quelconque des revendications 5 à 10, **caractérisés en outre par** des buses (248, 249) situées à l'intérieur d'un sol dudit foyer et des moyens, couplés auxdites buses, pour introduire de l'air à travers lesdites buses dans ladite chambre principale, lesdites buses étant inclinées dans la direction de haut en bas.
